# EUROPÄISCHE PATENTSCHRIFT

(11) **EP 0 668 815 B1**
(45) Veröffentlichungstag und Bekanntmachung des Hinweises auf die Patenterteilung: **21.01.1998**
(21) Anmeldenummer: 94925398.3
(22) Anmeldetag: 27.07.1994
(51) Int. Cl.: B27F 1/00, B27F 1/04, B27G 5/02, B23D 45/14

(54) **VERFAHREN ZUM VERBINDEN VON PLATTEN, VIERKANTSTÄBEN OD. DGL., INSBESONDERE FÜR DIE TISCHLEREI, SOWIE VORRICHTUNG ZUM DURCHFÜHREN DES VERFAHRENS**
PROCESS AND DEVICE FOR JOINING BOARDS, SQUARE BARS OR THE LIKE, IN PARTICULAR FOR JOINERY
PROCEDE ET DISPOSITIF D'ASSEMBLAGE DE PANNEAUX, DE BARRES CARREES OU ANALOGUES, NOTAMMENT EN MENUISERIE

(30) Priorität: 12.08.1993 DE 9312052 U
(43) Veröffentlichungstag der Anmeldung: 30.08.1995
(73) Patentinhaber: Christians, Waldemar, D-42855 Remscheid (DE)
(72) Erfinder: Christians, Waldemar, D-42855 Remscheid (DE)
(74) Vertreter: Mentzel, Norbert, Dipl.-Phys.
(86) Internationale Anmeldenummer: EP9402474
(87) Internationale Veröffentlichungsnummer: WO9505274

(56) Entgegenhaltungen:
- WO-A-90/07066
- CH-A- 147 875
- DE-C- 937 614
- FR-A- 1 024 970
- FR-A- 1 396 872
- GB-A- J13 572
- GB-A- 159 707
- US-A- 1 740 555
- US-A- 1 779 206
- US-A- 2 455 097

## Beschreibung

Die Erfindung richtet sich auf ein Verfahren der im Oberbegriff des Anspruches 1 angegebenen Art. Es ist schwierig, mit konventionellen Mitteln aus Platten- und/oder Vierkant-Material, räumlich beliebig gekrümmte Gebilde herzustellen, wo die paarweise miteinander zusammenzufügenden Platten unter beliebigen Winkeln aufeinanderstoßen. So lassen sich z.B. Platten, die unter einem stumpfen Winkel zusammentreffen, nicht ohne weiteres mittels Schraubzwingen zusammendrücken, damit die auf ihre einander berührenden Gehrungsflächen aufgebrachten Klebstoffe in guten Kontakt kommen. Günstiger sind in dieser Hinsicht Verbindungen, wo an den Gehrungsflächen der beiden zu verbindenden Platten Längsnuten mit einem schwalbenschwanzförmigen Querschnitt eingeschnitten wurden, die im Gebrauchsfall ein Nuten-Paar bilden. Dieses Nuten-Paar dient als Aufnahme für eine ein Doppelkeilprofil aufweisende Spannleiste, welche dann die Verbindung erzeugt Die Herstellung einer solchen Verbindung war bisher schwierig und zeitaufwendig

Bei einem bekannten Verfahren (DE 937 614 C1) wurde der schwalbenschwanzförmige Querschnitt der Längsnut mit einem konischen Fräswerkzeug hergestellt, mit welchem die beiden Nutflanken gleichzeitig erzeugt wurden. Sofern eine Gehrungsfläche vorgesehen war, musste diese, davon unabhängig, auf einer anderen Maschine, nämlich einer Säge, in einem gesonderten Arbeitsgang geschnitten werden. Die Größe des von den beiden Nutflanken eingeschlossenen Spreizwinkels der Längsnut war durch das Fräswerkzeug vorgegeben und konnte nicht ohne weiteres den jeweiligen Verhältnissen angepasst werden. Bereits bei Verwendung von Material mit unterschiedlicher Festigkeit ergeben sich unterschiedliche Maße der mit dem Fräser erzeugten Längsnut. Diese lassen sich mit dem gegebenen Fräswerkzeug nicht mehr korrigieren. Bei dem bekannten Verfahren ließ sich, ohne Einsatz eines entsprechenden neuen Werkzeugs, auch nicht die lichte Weite der Längsnut oder der Nuttiefe verändern. Um Nutflanken in anderem Winkel zu erlangen, musste ein Fräswerkzeug mit entsprechender Konizität besorgt und montiert werden. Das erforderte großen Werkzeugaufwand und eine zeitaufwendige Umrüstung der Maschine. Dennoch war es schwierig, das Nutenprofil der gegebenen Doppelkeilform der Spannleiste anzupassen. Bei dem bekannten Verfahren konnte die Längsnut nur mit mäßiger Vorschubgeschwindigkeit erzeugt werden. Das mag damit zusammenhängen, dass die Abführung der vom Fräswerkzeug ausgeschnittenen Späne Probleme bereitet. Bewegte man die Platte mit einer zu großen Vorschubgeschwindigkeit, so konnte sich das Fräswerkzeug so stark erwärmen, dass es das Plattenmaterial verbrannte oder dass das Werkzeug selbst verglühte.

Aus der GB-A-13 572 ist eine Sägetisch entsprechend dem Oberbegriff des Anspruches 1 bekannt, der es ermöglicht in eine Platte mittels eines ersten Sägeblatts eine Gehrungsfläche zu schneiden, und im Anschluss daran mittels zweier nachfolgender, hintereinander angeordneter Schneidscheiben eine Längsnut in die Gehrungsfläche einzuarbeiten. Von Nachteil bei dieser bekannten Vorrichtung ist der hohe Aufwand bei der Justierung der einzelnen Schneidscheiben sowie des Sägeblattes bei jeder Gehrungsfläche mit verändertem Winkel zur Plattengrundfläche gegenüber der vorhergehend geschnittenen Gehrungsfläche.

Der Erfindung liegt zunächst die Aufgabe zugrunde, ein preiswertes Verfahren der eingangs genannten Art zu entwickeln, das eine zuverlässige, einfache und schnelle Herstellung von Längsnuten an den Gehrungsflächen der miteinander paarweise zu verbindenden Vierkantstäbe, Platten od. dgl. gestattet, die den jeweiligen Verhältnissen leicht und genau angepasst werden können. Die Erfindung richtet sich auf eine Vorrichtung zur Durchführung dieses Verfahrens. Dies wird verfahrensmäßig durch die im Kennzeichen des Anspruches 1 und vorrichtungsmäßig durch die im Anspruch 5 angeführten Maßnahmen erreicht, denen folgende Bedeutung zukommt.

Durch geeignete Auswahl der Schrägwinkel an der Gehrungsfläche lassen sich leicht aus ebenen Platten und/oder Vierkantstäben räumlich beliebig gekrümmte und/oder verkröpfte Gebilde herstellen. Dazu genügt es, die zur Herstellung der Gehrungsfläche dienende Schneidscheibe zusammen mit dem auf das gewünschte Nutprofil eingestellten Scheiben-Paar zu einer Baueinheit, z.B. einem Scheibentriplett, zu verbinden und als Ganzes, entsprechend dem gewünschten Schrägwinkel, entlang einer parallel zur Transportrichtung der Platte verlaufenden Schwenkachse zu verschwenken. Sofern eine Gehrungsfläche nicht geschnitten zu werden braucht, kommt man vorrichtungsmäßig mit dem nutbildenden Scheiben-Paar aus.

Die Verbindung zweier Platten entlang der entstandenen Gehrungsflächen erfolgt dann mittels der sich spiegelbildlich gegenüberliegenden schwalbenschwanzförmigen Längsnut die mittels einer Spannleiste miteinander verbunden werden. Die Spiegelbildlichkeit der sich gegenüberliegenden Längsnuten wird dabei in vorteilhafter Weise durch die Verstellbarkeit der Schneidscheiben als gekoppelte Einheit erreicht. Die vorliegende Erfindung ermöglicht also eine schnell und einfach herzustellende Verbindung der aus zerspanbarem Material bestehenden Platten. Diese Verbindung ist ebenfalls unter jeglichem Winkel der Platten zueinander möglich, da das Scheiden der Gehrungsfläche unter beliebigem Schrägwinkel bezüglich einer vorgegebenen Außenfläche erfolgen kann. Ein lästiges Nachjustieren der die Längsnut schneidenden Schneidscheiben, bei einer Veränderung des Neigungswinkels der, durch die erste Schneidscheibe geschnittenen Gehrungsfläche ist erfindungsgemäß nicht mehr erforderlich. Ebenfalls ist natürlich auch die gewünschte Nuttiefe, sowie die lichte Weite der Nut über die Voreinstellung der Nut-schneidenden Schneidscheiben möglich.

Weitere Maßnahmen und Vorteile der Erfindung ergeben sich aus den Unteransprüchen, der nachfolgenden Beschreibung und den Zeichnungen. In den Zeichnungen ist die Erfindung in mehreren Ausführungsbeispielen dargestellt. Es zeigen:
- Fig. 1: eine perspektivische, teilweise gebrochene Darstellung zweier auf Gehrung zusammenzufügender Platten mit eingearbeiteten Längsnuten vor ihrer Montage,
- Fig. 2: in einer der Fig. 1 entsprechenden Darstellung die Platten nach ihrer Zusammenfügung mittels einer Spannleiste,
- Fig. 3: in entsprechender perspektivischer Darstellung die zur Verbindung der Platten von Fig. 1 dienende Spannleiste,
- Fig. 4: in starker Vergrößerung und im Ausbruch, die Verbindungsstelle zwischen den beiden Platten von Fig. 2,
- Fig. 5: in einer verkleinerten, perspektivischen Darstellung eine der zahlreichen Anwendungen der erfindungsgemäßen Verbindung zur Herstellung eines konischen, S-förmig gekrümmten Gebildes mit spiegelbildlicher Konizität in den beiden S-Bögen,
- Fig. 6: eine schematische Darstellung der Vorrichtung zum Herstellen eines wählbaren Randprofils an den miteinander zu verbindenden Platten oder Vierkantstäben,
- Fig. 7: eine Stirnansicht der in Fig. 6 gezeigten Vorrichtung,
- Fig. 8: in Vergrößerung und schematischem Schnitt durch die Werkzeuge ein Teilstück der in Fig. 7 gezeigten Vorrichtung und
- Fig. 9: in entsprechender Vergrößerung die mit den Werkzeugen von Fig. 8 erzeugte Längsnut nach der Erfindung in einem Teilstück einer Platte, eines Vierkantstabes od. dgl..

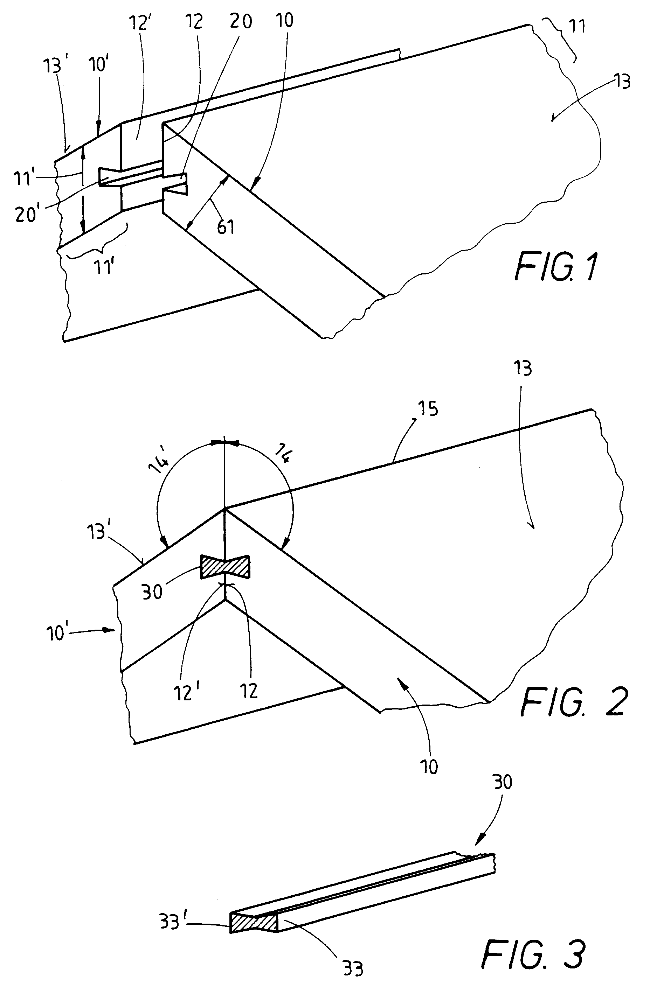

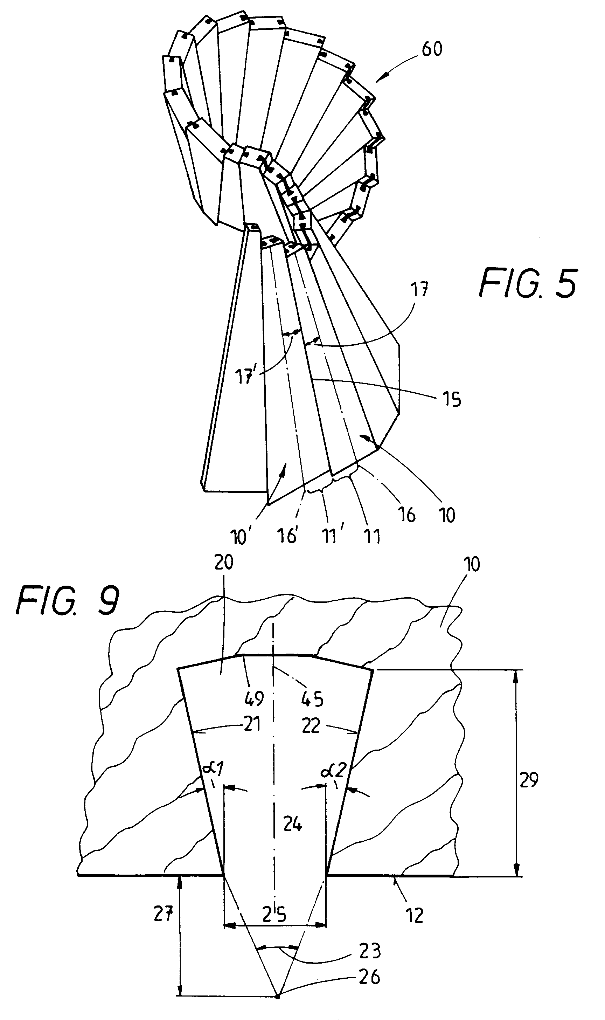

Um ein beliebig gekrümmtes räumliches Gebilde 60 herzustellen, wovon Fig. 5 ein Beispiel zeigt, geht man von einfachen ebenen Elementen 10, 10' aus, die aus Platten, Vierkantstäben od. dgl. bestehen und nachfolgend zusammenfassend kurz "Platten" benannt werden sollen. Dabei werden jeweils zwei Platten 10, 10' paarweise mittels einer Spannleiste 30 zusammengefügt, wie aus Fig. 1 bis 4 zu entnehmen ist. Jede der beiden Platten 10, 10' kann zwar, wie Fig. 5 erkennen lässt, individuell gestaltete Randbereiche 11, 11' aufweisen, die aber im Prinzip folgenden übereinstimmenden Aufbau haben.

Die beim Verbinden aneinander zu liegen kommenden Berührungsflächen der beiden Platten 10, 10' sind, wie am besten aus Fig. 1 zu erkennen ist, in der Regel auf Gehrung geschnitten, weshalb diese Berührungsflächen nachfolgend stets "Gehrungsflächen" genannt werden sollen und in Fig. 1 bis 12 bzw. 12' bezeichnet sind. Die Gehrungsfläche 12, 12' schließt mit einer vorgegebenen ebenen Außenfläche 13, 13' der beiden Platten 10, 10' einen in Fig. 2 verdeutlichten, frei wählbaren Schrägwinkel 14, 14' ein Zwischen den zusammengefügten Gehrungsflächen 12, 12' entsteht eine Fugenkante 15, welche, gemäß Fig. 5, bezüglich der strichpunktiert angedeuteten Längserstreckung 16, 16' einen individuellen Neigungswinkel 17, 17' einnehmen kann.

Im Randbereich 11, 11' der beiden zusammenzufügenden Platten 10, 10' werden Längsnuten 20, 20' eingeschnitten, die zwar einen frei wählbaren, aber miteinander übereinstimmenden Schwalbenschwanz-Querschnitt aufweisen, dessen Aussehen beispielsweise aus Fig. 9 zu ersehen ist. Die Längsnuten 20, 20' kommen im Mittenbereich der Stärke 18, 18' der beiden Platten 10, 10' zu liegen, wie aus Fig. 1 zu entnehmen ist. Die Längsnut 20 umfasst, wie aus Fig. 9 hervorgeht, jeweils zwei Nutflanken 21, 22, die einen an sich frei wählbaren Spreizwinkel 23 einschließen. Die Längsnut 20 verjüngt sich aufgrund des Spreizwinkels 23 zur zugehörigen Gehrungsfläche 12 der Platte 10 hin und lässt dort eine Nutöffnung 24 definierter Weite 25 entstehen. Bei gegebenen Spreizwinkel 23 lässt sich bei der Erfindung die lichte Weite 25 der Längsnut leicht anpassen, was vorrichtungsmäßig auf folgende Weise erreicht wird.

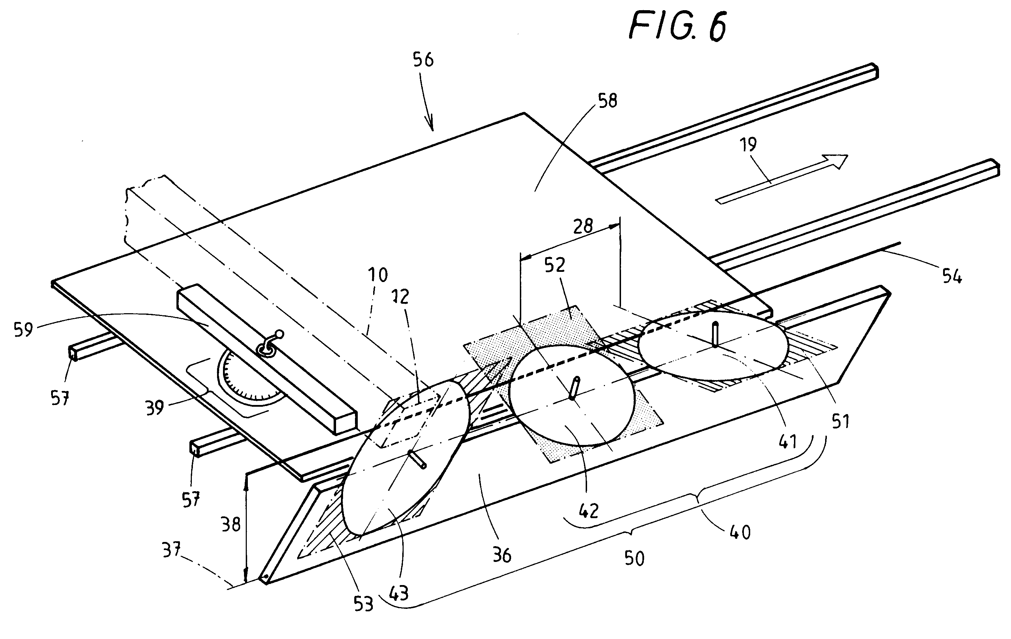

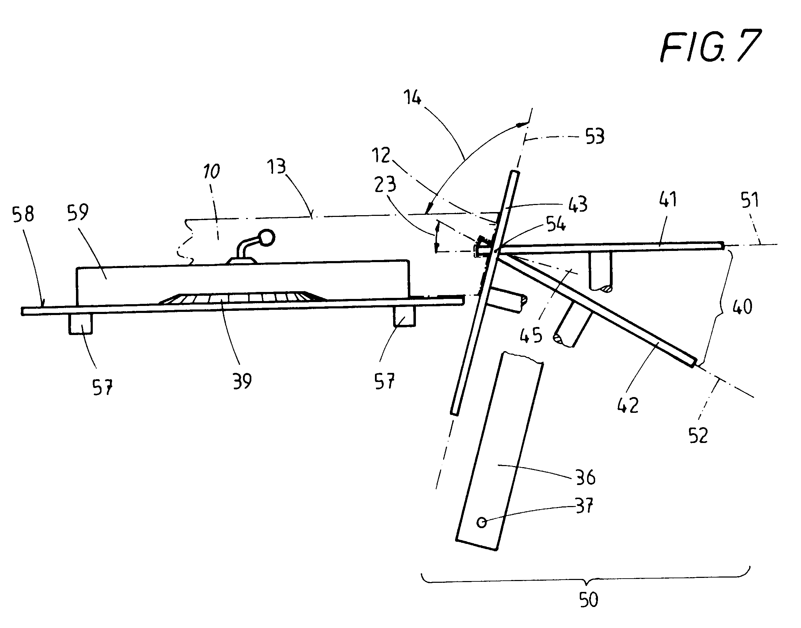

Zur Herstellung des gewünschten Randbereiches 11 einer Platte 10 dienen drei, aus Fig. 6 bis 8 ersichtliche, ebene Schneidscheiben 41, 42, 43, die relativ zu der in Fig. 6 durch den Pfeil 19 veranschaulichten Transportrichtung der Platte 10 hintereinander liegen und drei Scheibenebenen 51, 52, 53 bestimmen, die sich in besonderer Weise schneiden. Die Platten 10, 10' bzw. Vierkantstäbe bestehen aus spanbarem Werkstoff, vorzugsweise aus Holzmaterial, weshalb die Schneidscheiben 41 bis 43 aus eine Umfangsverzahnung aufweisenden Sägeblättern bestehen. Die erste Schneidscheibe 43 weist mit ihrer Scheibenebene 53 den gewünschten Schrägwinkel 14 bezüglich der Platten-Außenfläche 13 auf, der aus Fig. 7 zu ersehen ist, und bestimmt damit den Schrägverlauf der entstehenden Gehrungsfläche 12.

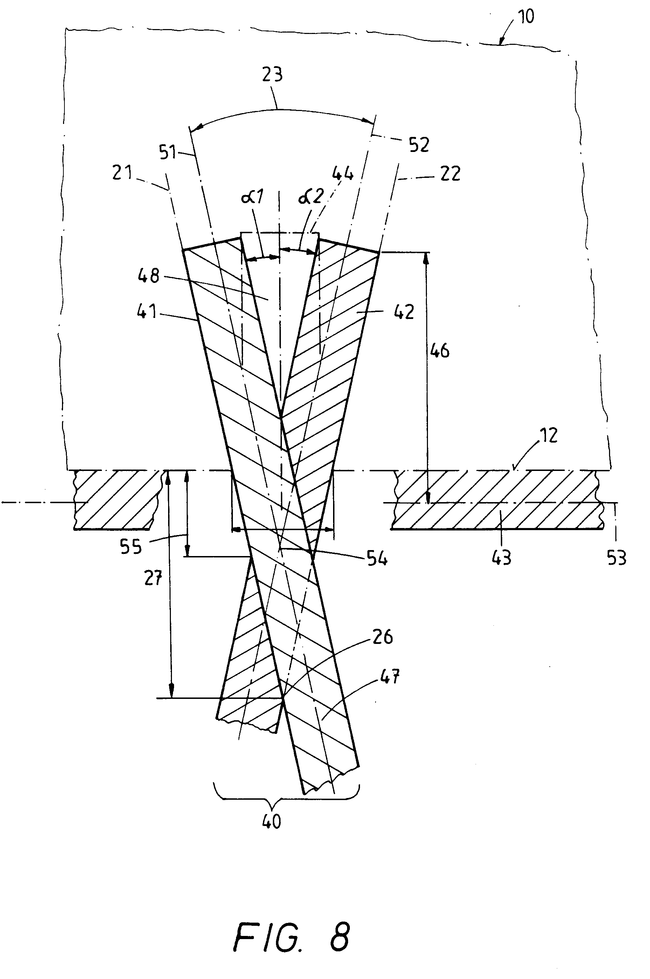

Die beiden anderen Schneidscheiben 41, 42 dienen zur Ausbildung der beiden Nutflanken 21, 22 vom Schwalbenschwanz-Querschnitt der Längsnut 20, weshalb sie nachfolgend kurz als "Scheiben-Paar" benannt und mit 40 gekennzeichnet werden sollen. Ausweislich der Fig. 6 und 8 schneiden sich die beiden Scheibenebenen 51, 52 dieses Scheiben-Paares 40 in einer Linie 54, die nachfolgend kurz "Durchdringungslinie" bezeichnet werden soll. Diese Durchdringungslinie 54 verläuft parallel zur Scheibenebene 53 der ersten Schneidscheibe 43, mit welcher die erwähnte Gehrungsfläche 12 der Platte 10 erzeugt wird. Die Durchdringungslinie 54 kann in einem aus Fig. 8 ersichtlichen Abstand 55 von der entstehenden Gehrungsfläche 12 liegen, wird aber vorzugsweise in den Bereich der Gehrungsfläche 12 oder der sie erzeugenden Scheibenebene 53 gelegt. Die Außenflächen der beiden Schneidscheiben 41, 42 bestimmen den Spreizwinkel 23 der entstehenden Längsnut 20. Der Scheitelpunkt 26 des Spreizwinkels 23 nimmt im Ausführungsbeispiel von Fig. 8 und 9 einen Höhenabstand 27 zur Gehrungsfläche 12 bzw. der Scheibenebene 53 ein.

Gemäß Fig. 9 verlaufen die Ebenen 21, 22 der beiden Nutflanken spiegelbildlich gleich bezüglich einer senkrecht zur Gehrungsfläche 12 liegenden Normalen 15, was dadurch zustande kommt, dass diese Normale den Winkel zwischen den beiden Scheibenebenen 52, 53 des Scheiben-Paares 40 halbiert. Es entsteht eine Längsnut 20 mit symmetrischem Querschnitt, wo die Nutflanken 21, 22 mit spiegelbildlich gleichen Teil-Winkeln α₁, α₂ zur Normalen 45 verlaufen. Eine Besonderheit der Erfindung besteht darin, dass die beiden Nutflanken 21, 22 ausweislich der Fig. 6, in räumlichen Längsversatz 28, und damit zeitlich nacheinander, erzeugt werden. Dadurch lässt sich die Größe des Spreizwinkels 23 frei wählen und den Erfordernissen der Spannleiste genau justieren. Wie aus Fig. 8 hervorgeht, ragen die beiden nutbildenden Schneidscheiben 41, 42 gleich weit, nämlich um die Strecke 46, über die zum Erzeugen der Gehrungsfläche 12 dienenden Schneidscheibe 43 heraus und bestimmen damit die Nuttiefe 29 von Fig. 9. Bei gegebenem Spreizwinkel 23 ist über das aus Fig. 7 ersichtliche Ausmaß 46 des Herausragens des Scheiben-Paares 40 über die erste Schneidscheibe 43 auch die bereits erwähnte, aus Fig. 9 ersichtliche Weite 24 der Nutöffnung 25 wählbar. Diese Öffnungsweite 25 lässt sich natürlich auch durch Änderung des Spreizwinkels frei bestimmen. Durch parallelen Versatz der Schneidscheiben 41, 42 im Scheiben-Paar 40 lässt sich leicht die gewünschte lichte Weite 25 der ganzen Längsnut 20 einstellen.

Im dargestellten Ausführungsbeispiel von Fig. 8 und 9 ist bei der gegebenen Schneidscheiben-Dicke 47 und dem gewählten Spreizwinkel 23 ein aus Fig. 8 ersichtlicher Freiraum 48 belassen, der beim Nutenschneiden einen störenden Werkstoffgrat im Inneren der Längsnut 20 entstehen lassen könnte. Dies lässt sich aber leicht dadurch beseitigen, dass man außer den erwähnten drei Schneidscheiben 41 bis 43 noch eine vierte, in Fig. 8 strichpunktiert angedeutete Schneidscheibe 44 vorsieht. Die Ebene dieser vierten Schneidscheibe 44, die in Fig. 8 mit der strichpunktiert eingezeichneten Normalen 45 zusammenfällt, erzeugt den mittleren Bereich des Nutenbodens 49 gemäß Fig. 9. Bedarfsweise könnten noch mehrere weitere Scheiben in diesem Winkelbereich 23 angeordnet sein, falls die gegebene Scheibendicke der verwendeten vierten Schneidscheibe 44 zur Ausformung des Nutenbodens 49 nicht ausreichen sollte. Normalerweise wird man bestrebt sein, die Scheibendicke 47 und den Spreizwinkel 23 so zu wählen, dass, wie aus Fig. 7 hervorgeht, das Scheiben-Paar 40 allein bereits zur Erzeugung des Schwalbenschwanz-Querschnitts der Längsnut 20 ausreicht. Dann genügt zur Profilierung des Plattenrandes 11 das aus Fig. 6 und 7 ersichtliche Scheibentriplett 50 aus den drei Schneidscheiben 41, 42, 43. Bedarfsweise können noch weitere Schneidscheiben, z.B. die aus Fig. 8 ersichtliche vierte Schneidscheibe 44 hinzutreten, womit sich z.B. ein Scheibenquartett ergibt.

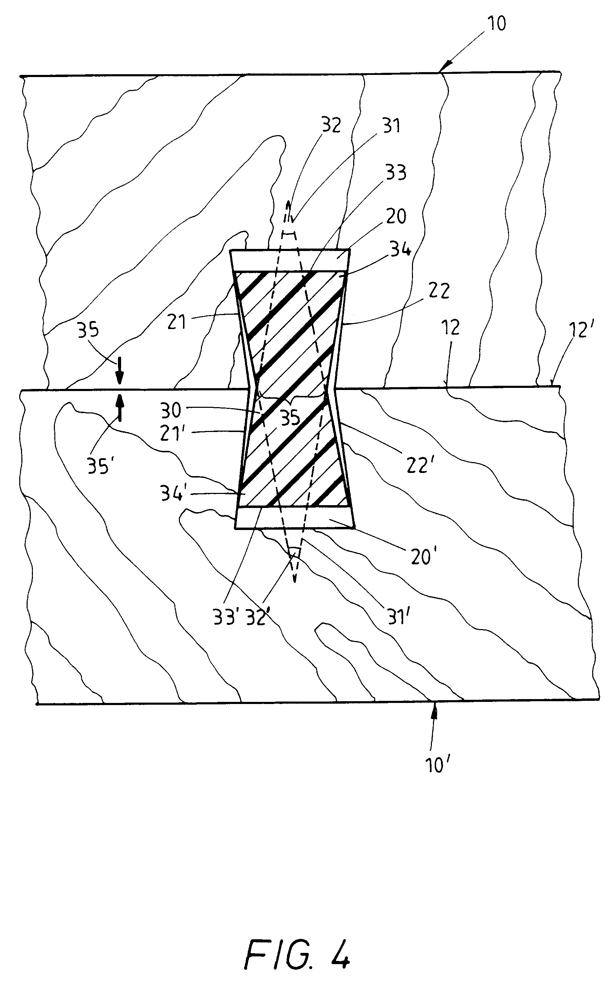

Wie aus Fig. 2 bis 4 hervorgeht, entsteht die Verbindung zunächst dadurch, dass die in vorerwähnter Weise erzeugten Gehrungsflächen 12, 12' der beiden Platten 10, 10' so zusammengelegt werden, dass die dort eingearbeiteten beiden Längsnuten 20, 20' eine Doppel-Nut bilden, die eine doppelkeilförmige Aufnahme für die bereits eingangs erwähnte Spannleiste 30 erzeugt. Wie aus Fig. 4 hervorgeht, hat die Spannleiste 30 ihrerseits ein Doppelkeilprofil aus zwei bezüglich der Platten-Gehrungsflächen 12, 12' zueinander spiegelbildlich divergierenden Keilprofilen 31, 31'. Der Keilwinkel 32, 32' der Spannleiste 30 ist zweckmäßigerweise etwas größer ausgebildet als der im Zusammenhang mit Fig. 9 ausführlich erläuterte Spreizwinkel 23 zwischen den beiden Flanken 21, 22 der plattenseitigen Längsnut 20. Die Spannleiste 30 wird vom Stirnende der beiden zu verbindenden Platten 10, 10' in die Doppelnut-Aufnahme 20, 20' eingeschoben. Dann stützen sich vornehmlich die an den beiden Keilbasen 33, 33' befindlichen Keilendbereiche 34, 34' an den zugehörigen Nutenflanken 21, 22 bzw. 21', 22' ab. Es entsteht eine Zugspannung im Material der Spannleiste 30. Dadurch kommt es zu einer Zusammenpressung der beiden Platten 10, 10' im Sinne der aus Fig. 4 ersichtlichen Druckpfeile 35, 35'.

Damit ist bereits eine Verbindung realisiert, die bereits ohne Verwendung adhäsiver Bindemittel im Bereich der Doppelnut 20, 20' eine ausreichende Festigkeit aufweist. So verbundene Platten 10, 10' sind an sich demontierbar. Vorteilhaft verwendet man Klebstoffe im Nutbereich, wenn eine dauerhafte Platten-Verbindung erwünscht ist. Vorzugsweise verwendet man für die Herstellung der Spannleiste 30 einen Kunststoff. Dann können die Spannleisten 30 zunächst in Form eines fortlaufenden Stranges hergestellt werden und brauchen dann nur noch entsprechend der gewünschten Leistenlänge zerschnitten zu werden. Das Kunststoffmaterial der Spannleiste 30 ist in sich elastisch und lässt sich dehnen, wodurch die vorerwähnte Zusammenpressung 35, 35' der beiden Platten 10, 10' gefördert wird. Zum leichten Einschieben in die Doppelnut 20, 20' können die Enden der Spannleiste 30 angefasst sein. Wenn eine Reibungserhöhung erwünscht ist, können die Keilflächen des Doppelkeilprofiles 31, 31' geriffelt sein. Die Spannleiste 30 hat eine Taille 35 gemäß Fig. 4, die gegenüber der in Fig. 9 beschriebenen Nutwelle 25 zweckmäßigerweise schlanker ausgebildet ist, was zur Erhöhung der beschriebenen Plattenspannung 35, 35' beiträgt.

Im Gebrauchsfall wird der Spreizwinkel 23 zwischen den beiden getrennt voneinander erzeugten Nutflanken 21, 22 in Abstimmung mit der zur verwendeten Spannleiste 30 fest eingestellt. Im Gebrauchsfall wird dann nur noch der erwähnte Schrägwinkel 14, 14' zwischen der jeweiligen Gehrungsfläche 12, 12' und der zugehörigen Außenfläche 13, 13' der beiden Platten 10, 10' so gewählt, wie es die Herstellung der jeweiligen Plattenkombination, z.B. des in Fig. 5 gezeigten Gebildes 60, erfordert. Weil aber auch die Lage der Nut 20 stets in der in Fig. 9 beschriebenen Normalen 45 zur Gehrungsfläche 12 liegen soll, nimmt das Scheiben-Paar 40 auch gegenüber der die Gehrungsfläche 12 bzw. 12' erzeugenden ersten Schneidscheibe 43 eine feststehende Position ein. Ausweislich der Fig. 7 liegt die Scheibenebene 53 stets senkrecht zu der Winkelhalbierenden 45 zwischen den beiden Ebenen 51, 52 des Scheiben-Paares 40. Alle drei Schreiben 41 bis 43, die an sich zueinander beliebig einstellbar sind, nehmen daher im Gebrauchsfall eine feste Winkelposition zueinander ein und lassen sich an einem gemeinsamen Träger 36 montieren. Die drei Schneidscheiben des in Fig. 6 und 7 gezeigten Scheibentripletts 50 lassen sich ohne weiteres durch einen gemeinsamen, nicht näher gezeigten Motor antreiben.

Im Gebrauchsfall wird das ganze Scheibentriplett 50 entsprechend dem gewünschten Schrägwinkel 14 der zu bildenden Gehrungsfläche 12 eingestellt. Dies erfolgt durch ein gemeinsames Verschwenken des Scheibentripletts 50 bezüglich einer parallele zur beschriebenen Transportrichtung 19 gemäß Fig. 6 verlaufenden, dort strichpunktiert angedeuteten Schwenkachse 37. Im Ausführungsbeispiel von Fig. 6 und 7 ist diese Schwenkachse 37 in einem Abstand 38 bezüglich der oben beschriebenen Durchdringungslinie 54 der beiden Scheibenebenen 51, 52 angeordnet. Günstig ist es aber, diese Durchdringungslinie 54 mit der Schwenkachse 37 zusammenfallen zu lassen.

Im dargestellten Ausführungsbeispiel nimmt das Scheibentriplett 50 eine ruhende Position in der Vorrichtung ein, während die zu bearbeitende Platte 10, gemäß Fig. 6, über ein Transportmittel 56 bewegt wird. Dazu dient im vorliegenden Fall ein Schlitten 56, der auf Führungsschienen 57 längsgeführt ist. Der Schlitten 56 besitzt eine Auflagefläche 58, die von einem Anschlagwinkel 59 begrenzt ist.

Der Anschlagwinkel 59 ist über eine Skalierung 39 beliebig einstellbar. Diese Einstellung erfolgt in Abstimmung mit dem im Zusammenhang mit Fig. 5 beschriebenen Neigungswinkel 17, 17' der zu erzeugenden Gehrungsflächen 12, 12' der zusammenzufügenden Platten 10, 10'. Über den Anschlagwinkel 59 läßt sich somit die Neigung des Längsverlaufs der Platte 10 10' bezüglich der Transportrichtung 19 wählen.

Es versteht sich, dass, in einer zu Fig. 6 und 7 umgekehrten Weise, die zu bearbeitende Platte 10 eine ruhende Position in der Vorrichtung einnehmen könnte, während das Scheibentriplett 50 in der gewünschten Transportrichtung 19 bewegbar ist. Es kommt nämlich lediglich auf eine relative Bewegung des Scheibentripletts 50 bezüglich der zu bearbeitenden Platte 10 an.

## Patentansprüche

1. Verfahren zum Verbinden von vorzugsweise auf Gehrung geschnittenen Platten (10, 10'), Vierkantstäben od. dgl., insbesondere für die Tischlerei,
bei dem zunächst die zwischen den paarweise zusammenzufügenden Platten (10, 10') bestehenden Gehrungsflächen (12, 12') mittels einer ersten Schneidscheibe (43) geschnitten werden,
dann, durch mindestens zwei in Transportrichtung der Platten hintereinander angeordnete Schneidscheiben (41, 42), die ein Scheiben-Paar (40) bilden, jeweils eine Längsnut (20, 20') mit schwalbenschwanzförmigem Querschnitt in die Gehrungsflächen (12, 12') der beiden Platten (10, 10') eingearbeitet wird, die ein Nuten-Paar bilden,
wobei der Scheitelpunkt (26) des Spreizwinkels (23), wo sich die beiden Ebenen der getrennt voneinander erzeugten Nutflanken (21, 22) schneiden in seinem Höhenabstand (27) zur Gehrungsfläche (12) über die Voreinstellung der Nuten bildenden Schneidscheiben (41, 42) einstellbar ist, das Scheiben-Paar (40) aber gegenüber der die Gehrungsfläche (12) der Platte (10) erzeugenden dritten Schneidscheibe (41) eine feststehende Position einnimmt,
und die, durch die Schneidscheiben (41, 42) erzeugten Nutflanken (21, 22) im Wesentlichen gleich tief von der Gehrungsfläche (12, 12') aus in die Platten (10, 10') hineinragen und die Nuttiefe der Längsnut bestimmen,
**dadurch gekennzeichnet,**
dass die, die Gehrungsfläche und die Längsnut erzeugenden Schneidscheiben (41, 42, 43) im Gebrauchsfall ein fest eingestelltes Scheibentriplett (50) bzw. Scheibenquartett bilden, welches zur Auswahl des gewünschten Schrägwinkels (14) der Gehrungsfläche (12) der Platte (10) gemeinsam, als ein Block, bezüglich einer parallel zur Transportrichtung (19) der Platte (10) verlaufenden Achse (37) verschwenkbar ist,
und dass in das von den Schneidscheiben in den beiden zusammenzufügenden Platten (10, 10') erzeugte Nuten-Paar (20, 20') eine Spannleiste (30) eingeschoben wird,
welche ein Doppelkeilprofil aufweist aus zwei bezüglich der Platten-Gehrungsflächen (12, 12') zueinander spiegelbildlich divergierenden Keilprofilen (31, 31').

2. Verfahren nach Anspruch 1, dadurch gekennzeichnet, dass zwar der Schrägwinkel (14) zwischen der Gehrungsfläche (12) und der Außenfläche (13) der Platte (10) frei wählbar ist, dabei aber der Spreizwinkel (23) zwischen den beiden voneinander getrennt erzeugten Nutflanken (21, 22) sowohl hinsichtlich seiner Größe als auch hinsichtlich der Lage seines Scheitelpunktes (26) bezüglich der Gehrungsfläche (12) fest eingestellt bleibt.

3. Verfahren nach Anspruch 1 oder 2, dadurch gekennzeichnet, dass die Gehrungsfläche (12, 12') geneigt (Neigungswinkel (17, 17') zur Längserstreckung (16, 16') der Platte (10, 10') gelegt wird.

4. Verfahren nach einem oder mehreren der Ansprüche 1 bis 3, dadurch gekennzeichnet, dass die das Doppelkeilprofil (31, 31') aufweisende Spannleiste (30) aus Kunststoff hergestellt wird.

5. Vorrichtung zum Durchführen des Verfahrens nach einem oder mehreren der Ansprüche 1 bis 4, bei dem relativ zur Transportrichtung (19) der Platte (10) mindestens drei ebene Schneidscheiben (41, 42, 43) zwar hintereinander liegen, aber die beiden Ebenen der Scheiben (Scheibenebenen 51, 52) sich in einer Durchdringungslinie (54) schneiden, und die Durchdringungslinie (54) zwischen den beiden Scheibenebenen (51, 52) des Scheiben-Paares (40) parallel zu der, von der dritten Schneidscheibe erzeugten Gehrungsfläche verläuft,
**dadurch gekennzeichnet**,
dass die Schneidscheiben (41, 42 43) im Gebrauchsfalle eine gemeinsam verstellbare Einheit in Form eines Scheibentripletts (50) bzw. Scheibenquartetts bilden, die entlang einer parallel zur Transportrichtung (19) der Platte (10) verlaufenden Achse (37) verschwenkbar ist.

6. Vorrichtung nach Anspruch 5, dadurch gekennzeichnet, dass parallel zu den beiden Scheibenebenen (51, 52) des Scheiben-Paares (40), aber im Höhenversatz dazu, mindestens ein weiteres Scheiben-Paar angeordnet ist, welches eine weitere, parallele Längsnut in der Platte (10) erzeugt.

7. Vorrichtung nach Anspruch 5 oder 6, dadurch gekennzeichnet, dass die Ebene (45) einer vierten Schneidscheibe (44) oder die Ebenen mehrerer weiterer Schneidscheiben in dem Winkelbereich (Spreizwinkel 23) zwischen dem Scheiben-Paar (40) angeordnet sind, welches die beiden Nutflanken (21, 22) einer Längsnut (20) erzeugt, und diese weiteren Schneidscheiben (44) den mittleren Bereich vom Nutboden (49) der Längsnut (20) bestimmen.

8. Vorrichtung nach Anspruch 5, dadurch gekennzeichnet, dass die Schwenkachse (37) von der Durchdringungslinie (54) zwischen den beiden Scheibenebenen (51, 52) des Scheiben-Paares (40) einen Abstand (38) aufweist.

9. Vorrichtung nach Anspruch 5, dadurch gekennzeichnet, dass die Durchdringungslinie (54) zwischen den beiden Scheibenebenen (51, 52) des Scheiben-Paares (40) mit der Schwenkachse (37) zusammen fällt.

10. Vorrichtung nach einem oder mehreren der Ansprüche 5 bis 9, dadurch gekennzeichnet, dass die Durchdringungslinie (54) zwischen den beiden Scheibenebenen (51, 52) des nutenbildenden Scheiben-Paares (40) im Mittelbereich der Stärke (61) der Platte (60) angeordnet ist.

11. Vorrichtung nach einem oder mehreren der Ansprüche 8 bis 10, dadurch gekennzeichnet, dass die Schneidscheiben (41, 42, 43) des Scheibentripletts (50) bzw. Scheibenquartetts auf einem gemeinsam verschwenkbaren Träger (36) montiert sind.

12. Vorrichtung nach einem oder mehreren der Ansprüche 5 bis 11, dadurch gekennzeichnet, dass eine Normale (45) zur Ebene (53) der ersten Schneidscheibe (43), welche die Gehrungsfläche (12) erzeugt, den Spreizwinkel (23) halbiert, welcher zwischen den beiden Ebenen (51, 52) des nutbildenden Scheiben-Paares (40) liegt.

13. Vorrichtung nach einem oder mehreren der Ansprüche 5 bis 12, dadurch gekennzeichnet, dass mindestens zwei der Schneidscheiben (41, 42, 43) einen gemeinsamen Antrieb aufweisen.

14. Vorrichtung nach einem oder mehreren der Ansprüche 5 bis 10, dadurch gekennzeichnet, dass die Platte (10) über ein Transportmittel (56) bezüglich des ruhenden Scheibentripletts (50) bzw. Scheibenquartetts beweglich ist und die Transportrichtung (19) der Platte (10) bestimmt, (Fig. 6).

15. Vorrichtung nach einem oder mehreren der Ansprüche 5 bis 14, dadurch gekennzeichnet, dass die Schneidscheiben (41, 42, 43) aus Sägeblättern bestehen.

## Claims

1. A method of connecting preferably mitre-cut panels (10, 10'), quadrangular bars or the like, in particular for joinery,
wherein firstly the mitre surfaces (12, 12') which are between the panels (10, 10') that are to be assembled in pairs are cut by means of a first cutting disc (43),
then at least two cutting discs (41, 42) which are arranged in succession in the direction of transportation movement of the panels and which form a disc pair (40) are used to produce a respective longitudinal groove (20, 20') of dovetail-shaped cross-section in the mitre surfaces (12, 12') of the two panels (10, 10'), which grooves form a groove pair,
wherein the apex (26) of the spread angle (23) where the two planes of the groove flanks (21, 22) which are produced separately from each other intersect is adjustable in its spacing in respect of height (27) relative to the mitre surface (12) by way of pre-setting of the groove-forming cutting discs (41, 42), but the disc pair (40) assumes a fixed position with respect to the third cutting disc (41) producing the mitre surface (12) of the panel (10), and the groove flanks (21, 22) produced by the cutting discs (41, 42) project substantially equally deep from the mitre surface (12, 12') into the panels (10, 10') and determine the groove depth of the longitudinal groove,
characterised in that the cutting discs (41, 42, 43) which produce the mitre surface and the longitudinal groove form in the situation of use a fixedly set disc triplet (50) or disc quartet which to select the desired angle (14) of inclination of the mitre surface (12) of the panel (10) is pivotable jointly as a block with respect to an axis (37) extending parallel to the direction (19) of transportation movement of the panel (10), and
a tightening bar (30) is inserted into the groove pair (20, 20') produced by the cutting discs in the two panels (10, 10') to be assembled,
which tightening bar has a double wedge profile comprising two wedge profile portions (31, 31') which diverge in mirror-image relationship to each other with respect to the panel mitre surfaces (12, 12').

2. A method according to claim 1 characterised in that the angle of inclination (14) between the mitre surface (12) and the outside surface (13) of the panel (10) can admittedly be freely selected but in that respect the spread angle (23) between the two groove flanks (21, 22) which are produced separately from each other remains fixedly set in respect of its size and also in respect of the position of its apex (26) relative to the mitre surface (12).

3. A method according to claim 1 or claim 2 characterised in that the mitre surface (12, 12') is disposed inclinedly (angle of inclination (17, 17')) relative to the longitudinal extent (16, 16') of the panel (10, 10').

4. A method according to one or more of claims 1 to 3 characterised in that the tightening bar (30) which has the double wedge profile (31, 31') is made from plastics material.

5. Apparatus for carrying out the method according to one or more of claims 1 to 4 wherein at least three flat cutting discs (41, 42, 43) are admittedly disposed in succession relative to the direction (19) of transportation movement of the panel (10), but the two planes of the discs (disc planes 51, 52) intersect in an intersection line (54) and the intersection line (54) extends between the two disc planes (51, 52) of the disc pair (40) parallel to the mitre surface produced by the third cutting disc,
characterised in that
the cutting planes (41, 42, 43) form in the situation of use a jointly displaceable unit in the form of a disc triplet (50) or disc quartet which is pivotable along an axis (37) extending parallel to the direction (19) of transportation movement of the panel (10).

6. Apparatus according to claim 5 characterised in that arranged parallel to the two disc planes (51, 52) of the disc pair (40) but displaced in heightwise relationship thereto is at least one further disc pair which produces a further parallel longitudinal groove in the panel (10).

7. Apparatus according to claim 5 or claim 6 characterised in that the plane (45) of a fourth cutting disc (44) or the planes of a plurality of further cutting discs are arranged in the angular region (spread angle (23)) between the disc pair (40) which produces the two groove flanks (21, 22) of a longitudinal groove (20) and said further cutting discs (44) determine the middle region of the groove bottom (49) of the longitudinal groove (20).

8. Apparatus according to claim 5 characterised in that the pivot axis (37) is at a spacing (38) from the intersection line (54) between the two disc planes (51, 52) of the disc pair (40).

9. Apparatus according to claim 5 characterised in that the intersection line (54) between the two disc planes (51, 52) of the disc pair (40) coincides with the pivot axis (37).

10. Apparatus according to one or more of claims 5 to 9 characterised in that the intersection line (54) between the two disc planes (51, 52) of the groove-forming disc pair (40) is arranged in the middle region of the thickness (61) of the panel (60).

11. Apparatus according to one or more of claims 8 to 10 characterised in that the cutting discs (41, 42, 43) of the disc triplet (50) or disc quartet are mounted on a common pivotable carrier (36).

12. Apparatus according to one or more of claims 5 to 11 characterised in that a normal (45) to the plane (53) of the first cutting disc (43) which produces the mitre surface (12) bisects the spread angle (23) between the two planes (51, 52) of the groove-forming disc pair (40).

13. Apparatus according to one or more of claims 5 to 12 characterised in that at least two of the cutting discs (41, 42, 43) have a common drive.

14. Apparatus according to one or more of claims 5 to 10 characterised in that the panel (10) is movable by way of a transport means (56) with respect to the stationary disc triplet (50) or disc quartet and determines the direction (19) of transportation movement of the panel (10).

15. Apparatus according to one or more of claims 5 to 14 characterised in that the cutting discs (41, 42, 43) comprise saw blades.

## Revendications

1. Procédé d'assemblage de panneaux (10, 10'), de barres quadrangulaires ou analogues, coupés en onglet, en particulier pour la menuiserie,
dans lequel, d'abord, les faces d'onglet (12, 12') constituées entre les panneaux (10, 10') à assembler par paires sont coupées au moyen d'un premier disque à découper (43),
puis au moyen d'au moins deux disques à découper (41, 42), disposés les uns derrière les autres dans la direction de transport des panneaux et constituant une paire de disques (40), chaque fois une rainure longitudinale (20, 20') ayant une section transversale en forme de queue d'aronde étant creusée dans les faces d'onglet (12, 12') des deux panneaux (10, 10'), en constituant une paire de rainures,
le sommet (26) de l'angle d'écartement (23) auquel les deux plans des flans de rainure (21, 22) générés séparément les uns des autres, se coupent, étant réglable, concernant son espacement en hauteur (27) par rapport à la surface d'onglet (12), par l'intermédiaire du pré-réglage des disques de coupe (41, 42) formant les rainures, la paire de disques (40) prenant cependant une position fixe par rapport au troisième disque de coupe (41) générant la surface en onglet (12) du panneau (10),
et les flancs de rainure (21, 22) générés par les disques de coupe (41, 42) pénétrant à une profondeur sensiblement égale, en partant de la surface en onglet (12, 12'), dans les panneaux (10, 10') et déterminant la profondeur de la rainure longitudinale,
caractérisé en ce que,
les disques de coupe (41, 42, 43) générant la surface en onglet et la rainure longitudinale constituent, en cas d'utilisation, un triplet de disques (50) ou respectivement un quartet de disques à réglage fixe, qui, pour sélectionner l'angle d'obliquité (14) souhaité de la surface en onglet (12) du panneau (10), est susceptible de pivoter conjointement, sous forme d'un bloc, par rapport à un axe (37) s'étendant parallèlement à la direction de transport (19) du panneau (10),
et en ce que, dans la paire de rainures (20, 20') générée par les disques de coupe dans les deux panneaux (10, 10') s'assemblant, est insérée une bande de serrage (30), qui présente un profil en double coin, constitué de profilés de coin (31, 31'), allant en divergeant suivant une symétrie spéculaire l'un par rapport à l'autre par rapport aux surfaces en onglet (12, 12') des panneaux.

2. Procédé selon la revendication 1, caractérisé en ce que, bien que, l'angle d'obliquité (14) entre la surface en onglet (12) et la surface extérieure (13) du panneau (10) puisse être sélectionné librement, l'angle d'écartement (23), entre les deux flancs de rainure (21, 22) générées séparément l'une de l'autre, reste cependant réglé à une valeur fixe, tant concernant sa valeur, qu'également concernant la position de son sommet (26) par rapport à la surface en onglet (12).

3. Procédé selon la revendication 1 ou la revendication 2, caractérisé en ce que la surface en onglet (12, 12') est placée de façon inclinée (angle d'inclinaison (17, 17')), par rapport à la direction longitudinale (16, 16') du panneau (10, 10').

4. Procédé selon l'une ou plusieurs des revendications 1 à 3, caractérisé en ce que la bande de serrage (30) présentant le profil en coin double (31, 31') est réalisée en matière plastique.

5. Dispositif de mise en oeuvre du procédé selon l'une ou plusieurs des revendications 1 à 4, dans lequel, par rapport à la direction de transport (19) du panneau (10), au moins trois disques de coupe (41, 42, 43) sont installés certes les uns derrière les autres, mais les deux plans des disques (plans de disques 51, 52)) se coupant selon une ligne de pénétration (54) et la ligne de pénétration (54) s'étendant entre les plans de disque (51, 52) de la paire de disques (40) parallèlement à la surface en onglet générée par le troisième disque de coupe, caractérisé en ce que les disques de coupe (41, 42, 43) constituent, en cas d'utilisation, une unité réglable conjointement, se présentant sous la forme d'un triplet de disques (50) ou d'un quartet de disques, susceptible de pivoter autour d'un axe (37) passant parallèlement par rapport à la direction de transport (19) de la plaque (10).

6. Dispositif selon la revendication 5, caractérisé en ce que, parallèlement par rapport aux deux plans de disque (51, 52) de la paire de disques (40), mais décalés en hauteur par rapport à ceux-ci, est disposée au moins une autre paire de disques qui génère une autre rainure longitudinale parallèle dans le panneau (10).

7. Dispositif selon la revendication 5 ou la revendication 6, caractérisé en ce que le plan (45) d'un quatrième disque de coupe (44) ou le plan de plusieurs autres disques de coupe sont disposés dans la plage angulaire (angle d'écartement 23), existant entre la paire de disques (40) qui génère les deux flancs de rainure (21, 22) d'une rainure longitudinale (20), et ces autres disques de coupe (44) déterminant la zone médiane depuis le fond de rainure (49) de la rainure longitudinale (20).

8. Dispositif selon la revendication 5, caractérisé en ce que l'axe de pivotement (37) présente un espacement (38) vis-à-vis de la ligne de pénétration (54) tracée entre les deux plans de disques (51, 52) de la paire de disque (40).

9. Dispositif selon la revendication 5, caractérisé en ce que la ligne de pénétration (54) entre les deux plans de disques (51, 52) de la paire de disques (40) coïncide avec l'axe de pivotement (37).

10. Dispositif selon l'une ou plusieurs des revendications 5 à 9, caractérisé en ce que la ligne de pénétration (54) est tracée entre les deux plans de disque (51, 52) de la paire de disque (40) formant la rainure, en passant dans la zone médiane de l'épaisseur (61) du panneau (60).

11. Dispositif selon l'une ou plusieurs des revendications 8 à 10, caractérisé en ce que les disques de coupe (41, 42, 43) du triplet de disques (50) respectivement du quartet de disques sont montés sur un support (36) pouvant pivoter conjointement.

12. Dispositif selon l'une ou plusieurs des revendications 5 à 11, caractérisé en ce qu'une normale (45) au plan (53) du premier disque de coupe (43) qui génére la surface en onglet (12) constitue la bissectrice de l'angle d'écartement (23) qui est située entre les deux plans (51, 52) de la paire de disques (40) générant la rainure.

13. Dispositif selon l'une ou plusieurs des revendications 5 à 12, caractérisé en ce qu'au moins deux des disques de coupe (41, 42, 43) présentent un entraînement commun.

14. Dispositif selon l'une ou plusieurs des revendications 5 à 10, caractérisé en ce que la plaque (10) est mobile par l'intermédiaire d'un moyen de transport (56), par rapport au triplet de disques (50) ou au quartet de disques au repos et détermine la direction de transport (19) du panneau (10) (figure 6).

15. Dispositif selon l'une ou plusieurs des revendications 5 à 14, caractérisé en ce que les disques de coupe (41, 42 43) sont constitués de lames de scie.
